## Europäisches Patentamt
## European Patent Office
## Office européen des brevets

(19)

(11) Veröffentlichungsnummer: **0 041 599**
**B1**

(12) **EUROPÄISCHE PATENTSCHRIFT**

(45) Veröffentlichungstag der Patentschrift: **24.04.85**

(21) Anmeldenummer: **81102275.5**

(22) Anmeldetag: **26.03.81**

(51) Int. Cl.⁴: **G 01 L 5/14,** G 01 L 23/10, G 01 L 1/16

(54) **Kraftaufnehmer, insbesondere für ballistische Druckmessungen.**

(30) Priorität: **10.06.80 DE 3021778**

(43) Veröffentlichungstag der Anmeldung:
**16.12.81 Patentblatt 81/50**

(45) Bekanntmachung des Hinweises auf die
Patenterteilung:
**24.04.85 Patentblatt 85/17**

(84) Benannte Vertragsstaaten:
**AT DE FR GB SE**

(56) Entgegenhaltungen:
**DE-A-2 557 213**
**US-A-3 228 248**

(73) Patentinhaber: **Kistler Instrumente AG**
**Eulachstrasse 22**
**CH-8408 Winterthur (CH)**

(72) Erfinder: **Engeler, Paul**
**Allmendweg 13**
**CH-8500 Frauenfeld/Schweiz (CH)**
Erfinder: **Sonderegger, Hans-Conrad**
**Sonnhaldenstrasse 7**
**CH-8413 Neftenbach (CH)**
Erfinder: **Wolfer, Peter**
**Kirchweg 347**
**CH-8450 Kl. Andelfingen (CH)**

(74) Vertreter: **Schmidt, Horst, Dr. et al**
**Patentanwälte Pohlmann & Schmidt**
**Siegfriedstrasse 8**
**D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft einen Aufnehmer für Druckmessungen anhand der Aufweitung eines unter Druck aufweitbaren Bauteiles, insbesondere für ballistische Druckmessungen an Geschosspatronen und dgl., mit einem Kraftübertragungselement und einen zwischen dem Kraftübertragungselement und einem Aufnehmerbasisteil gehaltenen elektrischen Wandlerelement, sowie ein Verfahren zu seiner Herstellung.

Verschiedene Methoden und Anordnungen zur Ermittlung der Höhe und des zeitlichen Verlaufes der in einer Patronenhülse sich entwickelnden Drücke sind bekannt. So sieht die Anordnung nach der DE—A—2 557 213 die Verwendung von Kupfer-Stauchzylindern vor. Hierzu muss die Patronenhülse angebohrt und das Verbrennungsgas in einen Zylinder mit einem darin angeordneten Kolben als Kraftübertragungselement geleitet werden. Der Kolben drückt auf ein zylindrisches Kupferstück, das je nach Höhe des Druckes mehr oder weniger gestaucht wird. Aus der Vergrösserung des Durchmessers oder der Verkleinerung der Länge des Kupferstückes kann auf die Höhe des in der Patronenhülse herrschenden Druckes geschlossen werden. Die Methode lässt sich allerdings nur zu Vergleichszwecken heranziehen, da sie keinen Aufschluss über die tatsächlich herrschenden Spitzendrücke gibt, weil die Stauchung nicht nur vom Spitzendruck, sondern auch von der Einwirkungszeit des Druckes abhängt. Es wurde deshalb auch schon vorgeschlagen, den Druck in der angebohrten Patronenhülse auf einen piezoelektrischen Hochdruckaufnehmer einwirken zu lassen. Dies ermöglicht die Aufzeichnung des zeitlichen Verlaufes des Druckes an einem Oszillographen, so dass sowohl der Spitzendruck als auch der Druckanstieg bzw. Druckabfall quantitativ bestimmt werden können. Beiden Messmethoden haftet jedoch der wesentliche systematische Fehler an, dass für die Druckerfassung die Patronenhülse angebohrt werden muss. Abgesehen von dem hiermit verbundenen Aufwand an Zeit und Arbeit bedeuten das Anbohren der Patronenhülse Gas- und Druckverluste und der erforderliche Verbindungskanal zum Aufnehmer ein zusätzliches den Druck herabsetzendes Volumen. Dies hat zur Folge, dass die gemessenen Spitzendrücke nicht den tatsächlichen Drücken in der Patronenhülse entsprechen.

Aus den US—A—3 886 792 und 3 960 018 sind piezoelektrische Aufnehmer für ballistische Druckmessungen an Geschosspatronen bekannt, deren Vorderpartie durch eine relativ dickwandige Membran gebildet ist, die auf der Patronenhülse aufliegen kann. Die aus der elastischen und plastischen Aufweitung der Patronenhülse resultierenden Kräfte werden über die Membran und einen kurzen Kraftübertragungsstempel auf das piezoelektrische Wandlerelement der Aufnehmer übertragen. Für die Messung wird der Aufnehmer in eine Bohrung im Patronenlager eingebaut, wobei die mit der Aussenfläche der Patronenhülse in Berührung kommende Membran eine solche Konfiguration haben soll, dass sie eine Fortsetzung der Patronenlagerbohrung darstellt.

Bei diesen bekannten Aufnehmern werden zwar der Verbrennungsablauf und die Strömungsverhältnisse in der Patronenhülse durch die Messeinrichtung praktisch nicht gestört und können auch Reihenmessungen vorgenommen werden, da sich ein Anbohren der Patronenhülse erübrigt, doch haftet diesen Aufnehmern der wesentliche Nachteil an, dass ihre druckaufnehmende Vorderpartie nur schwierig an die Konfiguration der Patronenlagerbohrung bzw. den Aussenumfang der Patronenhülse angepasst werden kann. Die in den genannten US-Patentschriften vorgeschlagene Massnahme, die durch die Membranen gebildeten Vorderpartien der Aufnehmer durch Unterlegscheiben an die Konfiguration der Patronenlagerbohrung anzupassen, ist nicht nur umständlich und für den Anwender unerwünscht, sondern führt auch nicht zu den erforderlichen Anlagegenauigkeiten von wenigen Mikrometern, so dass nach wie vor Kantenpressungen und dgl. verbleiben. Bei den bekannten piezoelektrischen Aufnehmern für ballistische Druckmessungen sind ferner die Messquarze sehr nahe an der druckausgesetzten Membran angeordnet, was neben einer schlechten Kraftverteilung auf das piezoelektrische Wandlerelement auch den Nachteil hat, dass dieses starken Wärmebeanspruchungen ausgesetzt ist.

Die Steifigkeit eines Aufnehmers ist bekanntlich stets kleiner als diejenige des Patronenlagers, so dass bei der Aufweitung einer Patronenhülse Aufnehmer und Patronenlager unterschiedliche Verformungen erfahren, d.h. die Membran des Aufnehmers wird gegenüber dem Umfang der Patronenlagerbohrung zurückversetzt. Die entstehende Einsenkung hat zur Folge, dass die Patronenhülse nicht mehr, wie bei der Eichung vorausgesetzt, vollständig an der Membran anliegt, sondern sich die Anlageverhältnisse je nach Ausmass der Einsenkung mehr oder minder verändern. Die aus den veränderten Anlageverhältnissen resultierende geringere Kraft auf das piezoelektrische Wandlerelement äussert sich in einer von Fall zu Fall unterschiedlichen Abweichung vom linearen Verlauf der Eichkurve. Dies hat zur Folge, dass dem Verwender der bekannten Aufnehmer keine vom jeweiligen Anwendungsfall unabhängige Eichkurve zur Verfügung gestellt werden kann, die sich ohne weiteres an der Messstelle zur Auswertung verwenden lässt. Vielmehr erfordern die bekannten piezoelektrischen Aufnehmer für ballistische Druckmessungen stets, dass der Verwender an der jeweiligen Feuerwaffe eine statische Kalibrierung mit einem Gas oder einer Flüssigkeit vornimmt. Die anhand einer solchen Eichkurve ermittelten Messwerte sind jedoch nach wie vor mit zum Teil erheblichen Fehlern behaftet, da wegen der erwähnten sich ändernden Anlageverhältnisse zwischen der Vorderpartie der Aufnehmer und der Patronenhülse im Laufe der Messung Abweichungen von den statischen Bedingungen eintreten, auf deren Basis die Eichkurve erstellt worden ist.

Demgegenüber liegt der Erfindung die Aufgabe zugrunde, einen universell kalibrierten, jedoch ohne weiteres an die jeweiligen Anwendungsverhältnisse individuell anpassbaren Aufnehmer der eingangs erwähnten Gattung sowie ein Verfahren zu seiner Herstellung zu schaffen.

Der erfindungsgemässe Aufnehmer mit dem eingangs erwähnten Aufbau zeichnet sich dadurch aus, dass in an sich bekannter Weise das Kraftübertragungselement von einer Aussenhülse umgeben ist, und dass die Kraftansprechempfindlichkeit $E_2$ des Aufnehmers mit Aussenhülse auf die Kraftansprechempfindlichkeit $E_1$ des Aufnehmers ohne Aussenhülse gemäss der Beziehung

$$E_2 = \frac{1}{1 + \frac{F_2}{F_1}} \cdot E_1 \cdot f$$

abgestimmt ist,

worin $F_1$ die dem Druck ausgesetzte Stirnfläche des Kraftübertragungselementes ist, $F_2$ die dem Druck ausgesetzte Stirnfläche der Aussenhülse ist und f ein Korrekturfaktor mit einem Wert von 1,0 bis 1,05 ist,

so dass in an sich bekannter Weise die Aussenhülse in annähernd dem gleichen Ausmass wie das Kraftübertragungselement dem einwirkenden Druck in Axialrichtung nachgibt.

Das Verfahren zum Herstellen eines derartigen Aufnehmers zeichnet sich dadurch aus, dass man die Kraftansprechempfindlichkeit $E_1$ der Anordnung, bestehend aus einem Kraftübertragungselement und einem zwischen dem Kraftübertragungselement und einem Aufnehmerbasisteil gehaltenen elektrischen Wandlerelement, bestimmt, um das Kraftübertragungselement eine Aussenhülse mit überhöhter Steifigkeit anordnet und am Aufnehmerbasisteil befestigt, die Kraftansprechempfindlichkeit $E_2$ der Anordnung mit Aussenhülse bestimmt und von der Aussenhülse Material unter Verringerung von deren Steifigkeit abnimmt, bis die oben genannte Beziehung erfüllt ist.

Im Unterschied zu den bekannten Aufnehmern für ballistische Druckmessungen an Geschosspatronen hat der erfindungsgemässe Aufnehmer an seiner Vorderpartie keine Membran, sondern wird eine Quasimembran erst durch die Wandung der Patronenhülse gebildet, wenn diese sich unter den Verbrennungsdrücken aufweitet. Die membranlose Ausbildung des Aufnehmers hat den Vorteil, dass der Verwender die Vorderpartie des Aufnehmers leicht an die jeweilige Konfiguration des Teiles anpassen kann, an dem die Druckmessung vorgenommen werden soll, ohne dass hierdurch die in der erfindungsgemässen Weise erfolgte Eichung oder Kalibrierung des Aufnehmers verlorengeht. Kalibriert wird der Aufnehmer mit fluchtenden Stirnseiten bzw. Stirnflächen von Kraftübertragungselement und Aussenhülse auf einem Prüfstand mit ebener Auflagefläche, indem man schrittweise die Wandstärke der Aussenhülse reduziert, so dass diese elastischer wird, bis die oben genannte Beziehung erfüllt ist. Danach ist gewährleistet, dass das Kraftübertragungselement als auch die Aussenhülse unter den auf diese Teile einwirkenden Drücken die gleichen Stauchungen erfahren, so dass zwischen beiden Teilen keine oder eine nur vernachlässigbar geringe Relativverlagerung eintritt. Die aus der Stauchung des Aufnehmers resultierende Verformung der Patronenhülse an der Vorderpartie des Aufnehmers wirkt sich daher hinsichtlich der veränderten Anlageflächen im wesentlichen nur auf die Aussenhülse, nicht jedoch auf das Kraftübertragungselement aus, so dass an dessen Stirnfläche die Patronenhülse auch bei Stauchung des Aufnehmers weiterhin voll anliegt.

Zwar wird in der US—A—3 228 248 ein Aufnehmer beschrieben, der infolge eines im wesentlichen gleichen Einfederungsverhaltens zweier dem Druck ausgesetzter Dehnrohre, von denen eines konzentrisch im Inneren des anderen liegt, eine lineare Eichkurve liefert, doch ist bei diesem Aufnehmer die Vorderpartie durch eine dünne bereichsweise wellenförmig verlaufende Membran abgedeckt, an der die Stirnseiten der Dehnrohre angeschweisst sind. Damit das Verhältnis der Federkonstanten der beiden Dehnrohre und der zugehörigen Membranflächen zur Erzielung des gewünschten gleichen Einfederungsverhaltens gleich wird, ist es erforderlich, dass die Abmessungen der betreffenden Aufnehmerbauteile exakt vorausbestimmt werden, wobei die errechneten Werte durch die Montage nicht verändert werden dürfen. Die Möglichkeit der individuellen Kalibrierung des Aufnehmers auf einem Prüfstand ist bei dem bekannten Aufnehmer ebenso wenig möglich wie eine nachträgliche Anpassung der Vorderpartie des Aufnehmers an die Konfiguration des Teiles, an dem die Druckmessung vorgenommen werden soll. Für ballistische Druckmessungen an Feuerwaffen ist der bekannte Aufnahme daher nicht geeignet.

Aus der CH—A—434 802 ist ferner ein piezoelektrischer Aufnehmer mit einer das Kraftübertragungselement umgebenden Hülse bekannt, die jedoch nur die Aufgabe hat, den Einbau des Aufnehmers in eine Montagebohrung zu erleichtern und die Vorspannung aufzubringen, mit der das piezoelektrische Wandlerelement zwischen dem Kraftübertragungselement und dem Aufnehmerbasisteil gehalten ist.

Weiterbildungen der Erfindung sind in den abhängigen Ansprüchen aufgeführt.

Eine Ausführungsform der Erfindung wird nachfolgend anhand der Zeichnung näher erläutert. Es zeigen:

Fig. 1 eine geschnittene Ansicht von einem erfindungsgemäss aufgebauten piezoelektrischen Kraftaufnehmer, eingebaut in eine Handfeuerwaffe,

Fig. 2 eine modifizierte Ausbildung des Kraftaufnehmers nach Fig. 1 zur Verwendung bei Feuerwaffen mit grossem Kaliber,

Fig. 2a einen Schnitt längs der Schnittlinie II—II in Fig. 2,

Fig. 3a und 3b schematische Darstellungen bezüglich der Anlageverhältnisse zwischen einer Patronenhülse und einem Kraftübertragungselement bei Aufnehmern herkömmlicher Bauart,

Fig. 3c bis 3e schematische Darstellungen bezüglich der Anlageverhältnisse zwischen einer Patronenhülse und dem Kraftübertragungselement bei einem erfindungsgmässen Kraftaufnehmer mit Aussenhülse,

Fig. 3f eine grafische Darstellung bezüglich des Verlaufes der Abweichungen von der linearen Beziehung bei einem Kraftaufnehmer herkömmlicher Bauart und einem Kraftaufnehmer nach der Erfindung,

Fig. 4 eine grafische Darstellung bezüglich der von dem piezoelektrischen Erfassungselement abgegebenen Ladung in Abhängigkeit vom Druck auf das Kraftübertragungselement bei einem Kraftaufnehmer herkömmlicher Bauart und einem Kraftaufnehmer nach der Erfindung,

Fig. 5 eine schematische Ansicht von einer Anordnung zur Eichung und Abstimmung eines Kraftaufnehmers nach der Erfindung.

In der nachfolgenden Beschreibung beziehen sich die Ausdrücke "unten" und "oben" auf die in der Zeichnung wiedergegebene Lage des ballistischen Kraftaufnehmers nach der Erfindung.

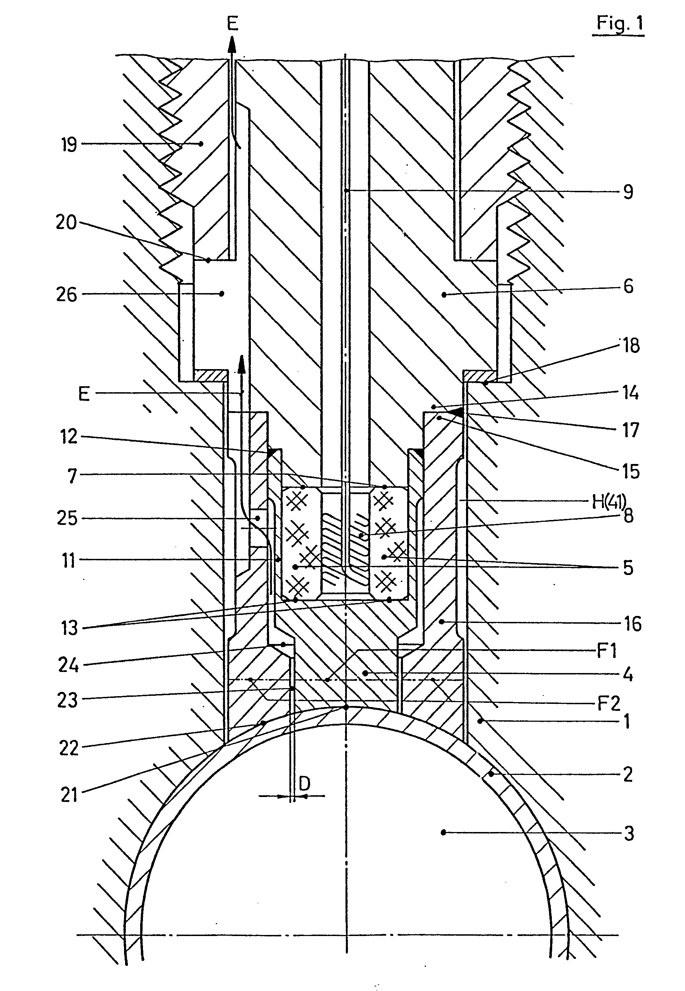

In Fig. 1, die eine gegenwärtig bevorzugte Ausführungsform des ballistischen Kraftaufnehmers nach der Erfindung, eingebaut in das Patronenlager 1 einer typischen Handfeuerwaffe, zeigt, ist mit 2 eine in Axialrichtung leicht konisch verlaufende Patronenhülse bezeichnet, die einen Pulvervorrat 3 enthält. Der Pulvervorrat 3 entwickelt nach Zündung Explosionsgase, die zu einer Aufweitung der Patronenhülse 2 führen.

Der in einer in der Zeichnung nicht näher bezeichneten Aufnahmebohrung im Patronenlager 1, die sich im wesentlichen senkrecht zur Mittelachse der Patronenhülse 2 erstreckt, angeordnete ballistische Kraftaufnehmer umfasst, wie dargestellt, einen Kraftübertragungsstempel 4, der mit seiner einen freien unteren Stirnfläche 21 auf der äusseren Umfangsfläche der Patronenhülse 2 bündig aufliegt und die Aufgabe hat, die aus der Aufweitung der Patronenhülse 2 resultierende Kraft auf einen Satz Erfassungselemente in Form von piezoelektrischen Messquarzen 5 zu übertragen. Der Kraftübertragungsstempel 4 hat erfindungsgemäss sowohl eine geeignete axiale Länge zwischen seiner unteren Stirnfläche 21 und seiner gegenüberliegenden oberen Stirnfläche 13, so dass die Messquarze 5 in einem geeigneten Abstand von der Stirnfläche 21 gehalten sind, als auch eine Durchmesserreduzierung an seinem unteren Endbereich, so dass die Stirnfläche 21, die auf der Patronenhülse 2 aufliegt, eine kleinere Flächenabmessung als die Stirnfläche 13 aufweist, auf der sich die Messquarze 5 abstützen. Hierdurch wird eine Verringerung des auf die Messquarze 5 einwirkenden Drucks erreicht.

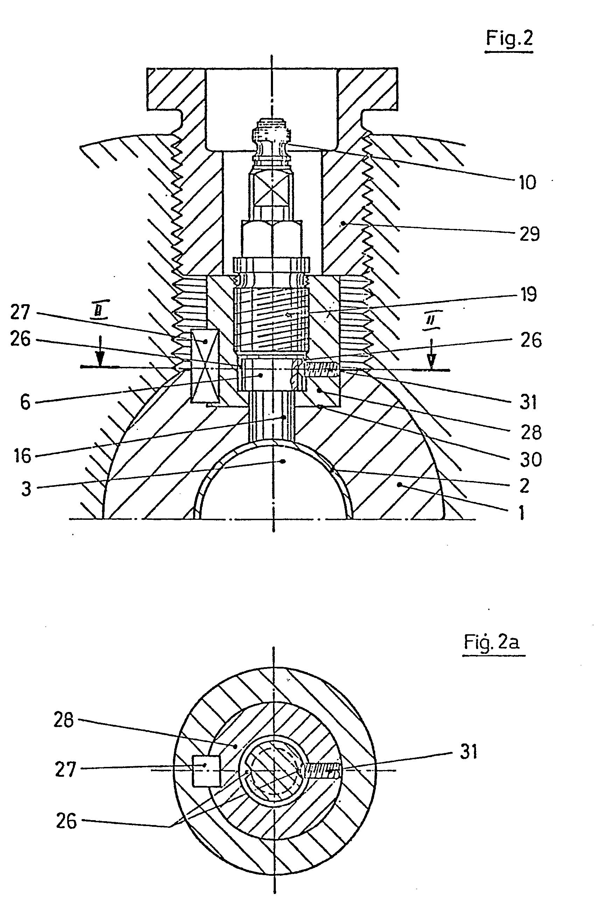

Die Messquarze 5 sind mit ihren gegenüberliegenden Endflächen, wie dargestellt, zwischen der oberen Stirnfläche 13 des Kraftübertragungsstempels 4 und der unteren Stirnfläche 7 von einem oberen Aufnehmerbasisteil 6 eingeklemmt, mit dem der ballistische Kraftaufnehmer im Patronenlager 2 fixiert wird. Aus noch zu erläuternden Gründen handelt es sich bei den Messquarzen vorzugsweise um Transversalquarze mit einem speziellen Schnitt, der im Detail in der deutschen Patentschrift 22 08 023 näher beschrieben ist, so dass hierauf ausdrücklich Bezug genommen wird. Bei der gezeigten Ausführungsform sind zwei derartige Messquarze 5, die z.B. durch einen Luftspalt gegeneinander isoliert sind, in Gestalt von zwei konzentrisch zur Mittelachse des Kraftaufnehmers liegenden Halbringen vorgesehen. Diese bilden zusammen einen Innenraum, in dem ein die entstehende piezoelektrische Ladung an den metallisierten Innenoberflächen der Messquarze 5 ableitendes Element, z.B. in Gestalt einer Spiralfeder 8, angeordnet ist. Die Spiralfeder 8 steht über eine durch eine zentrale Bohrung im Aufnehmerbasisteil 6 geführte Leitung 9 in Verbindung mit einem in Fig. 2 gezeigten Anschlusstecker 10.

Die Spiralfeder 8 dient der Ableitung der negativen Ladungen an den inneren Oberflächen der Messquarze 5, während die an den äusseren Oberflächen der Messquarze 5 entstehenden positiven Ladungen über eine am Kraftübertragungsstempel 4 angeformte Spannhülse 11 an Masse abgeleitet werden. Die Spannhülse 11 erstreckt sich, wie dargestellt, vom äusseren Randbereich der Stirnfläche 13 des Kraftübertragungsstempels 4 in Richtung auf das Aufnehmerbasisteil 6 und umgibt aussen die Messquarze 5. Die Spannhülse 11 hat neben der Ladungsableitung die Aufgabe, das Paar Messquarze 5 zwischen den Stirnflächen 7 und 13 von Aufnehmerbasisteil 6 bzw. Kraftübertragungsstempel 4 zusammenzupressen, und ist zu diesem Zweck an ihrem oberen Ende bei 12 an einer Absatzfläche des Aufnehmerbasisteils 6 unter Vorspannung angeschweisst. Durch die Vorspannung der Messquarze 5 wird erreicht, dass eventuell vorhandene Spaltelastizitäten beseitigt oder verringert werden.

Der Kraftübertragungsstempel 4 wird erfindungsgemäss, wie dargestellt, von einer Aussenhülse 16 konzentrisch aussen umgeben, die an ihrem oberen dem Basisteil 6 zugewandten Ende 15 an einer Absatzfläche 14 des Basisteils bei 17 angeschweisst ist. Das untere Ende der Aussenhülse 16 bildet eine ringförmige Stirnfläche 22, die ebenso wie die Stirnfläche 21 des Kraftübertragungsstempels 4 auf der Aussenoberfläche der Patronenhülse 2 bündig aufliegt.

Zwischen der inneren Umfangsfläche des unteren, der Stirnfläche 22 zugewandten verdickten Endbereiches der Aussenhülse 16 und dem betreffenden Abschnitt des Aussenumfangs des Kraftübertragungsstempels 4 verbleibt erfindungsgemäss ein Ringspalt 23 mit einer geeigneten Breite D von wenigen zehntel Millimetern. Dieser Ringspalt 23 steht in Verbindung mit einem oberen erweiterten Ringraum 24 zwischen Aussenhülse 16 und Kraftübertragungsstempel 4, und dieser Ringraum 24 steht wiederum in Verbindung mit einem Ringraum, der zwischen dem oberen Teil der Innenoberfläche der Aussenhülse 16 und der äusseren Umfangsfläche der Spannhülse 11 vorgesehen ist. An einer geeigneten Stelle im oberen Abschnitt der Aussenhülse 16 ist diese mit einer Durchgangsbohrung 25 versehen, die eine Verbindung zwischen einer im Aussenumfang der Aussenhülse 16 eingebrachten Axialnut und dem Ringraum zwischen Aussenhülse 16 und Spannhülse 11 herstellt. Die Axialnut im Aussenumfang der Aussenhülse 16 ist zu einer Axialnut 26 im Aussenumfang des Aufnehmerbasisteils 6 ausgerichtet, so dass in den dünnen Ringspalt 23 eintretende Gase oder Fremdstoffe, wie Fett, nach aussen gemäss der Pfeile E in Fig. 1 entweichen können.

Das Aufnehmerbasisteil 6 sitzt mit einem daran angeformten äusseren Ringflansch auf einer Schulter 18 in der Aufnahmebohrung im Patronenlager 1 auf, und ein in den oberen Abschnitt der Aufnahmebohrung eingeschraubter Gewindering 19 drückt mit seiner unteren Stirnfläche 20 den Flansch am Aufnehmerbasisteil 6 gegen die Schulter 18. Auf diese Weise wird der ballistische Kraftaufnehmer nach der Erfindung in der Aufnahmebohrung des Patronenlagers 1 fixiert. Darauf hinzuweisen ist, dass das Aufnehmerbasisteil 6, obschon in Fig. 1 nicht gezeigt, an seinem äusseren Umfang vorzugsweise zwei diametral gegenüberliegende Axialnuten 26 aus Gründen aufweist, auf die in Verbindung mit Fig. 2 näher eingegangen wird.

Fig. 2 zeigt eine modifizierte Ausbildung des ballistischen Kraftaufnehmers nach Fig. 1, wobei gleiche Teile wie in Fig. 1 das gleiche Bezugszeichen tragen. Die Ausführung nach Fig. 2 zeichnet sich durch das Vorsehen eines Adapterelementes 28 aus, welches insbesondere dann Verwendung findet, wenn der ballistische Kraftaufnehmer bei grossen schweren Waffen mit grossen Wandstärken im Bereich des Patronenlagers 1 eingesetzt werden soll. Das Adapterelement 28 vermittelt eine gute Wiederpositionierung der Stirnflächen 21 und 22 des Aufnehmers in Bezug auf das Patronenlager 1 bzw. die Patronenhülse 2 für den Fall, dass der Aufnehmer zu Wartungs- oder erneuten Kalibrierungszwecken wiederholt ein- und ausgebaut werden muss.

Wie insbesondere Fig. 2a zeigt, wird das Adapterelement 28 im Patronenlager 1 durch einen Keil 27 lagemässig fixiert, der in entsprechenden gegenüberliegenden Nuten im Patronenlager 1 bzw. Adapterelement 28 einsitzt. Ein Gewindering 29 kann in eine Gewindebohrung in einem das Patronenlager 1 umgebenden Mantel eingeschraubt werden und presst das Adapterelement 28 gegen den Keil 27 bzw. den Boden 30 der Bohrung im Patronenlager 1. Eine Stellschraube 31 mit einem konischen Vorderteil ist in einer Gewindebohrung im Adapterelement 28 eingeschraubt und greift mit ihrem konischen Vorderteil in eine der beiden diametral gegenüberliegenden Axialnuten 26, vgl. Fig. 1, ein, um das Basisteil 6 des Kraftaufnehmers in einer bestimmten Stellung relativ zum Patronenlager 1 zu fixieren. Die mit der Stellschraube 31 in Eingriff befindliche Axialnut 26 hat daher nur ausrichtende Funktion, während die gegenüberliegende Axialnut 26, wie in Verbindung mit Fig. 1 beschrieben, weiterhin der Ableitung der in den Ringspalt 23 eintretenden Gase oder Fette an die Aussenatmosphäre dient. Der übrige Aufbau des ballistischen Kraftaufnehmers nach Fig. 2 entspricht dem nach Fig. 1.

Aus Gründen, die nachfolgend deutlich werden, sollten die Stirnflächen 21 und 22, die auf der Aussenoberfläche der Patronenhülse 2 aufliegen, genau dem umfänglichen und axialen (konischen) Verlauf der Patronenhülse 2 angepasst sein. Dies wird erfindungsgemäss dadurch erreicht, dass man die Stirnflächen 21 und 22 vor Einbau des Aufnehmers in die Waffe zunächst plan ausbildet und etwas in die Bohrung im Patronenlager 1 hineinragen lässt. Nach Fixierung des Aufnehmers im Patronenlager 1 wird dann in dessen die Hülse 2 aufnehmenden Bohrung eine Reibahle eingeführt und das überstehende Material an Aussenhülse 16 und Kraftübertragungsstempel 4 solange ausgerieben, bis die in Fig. 1 gezeigte bündige Konfiguration der Stirnflächen 21 und 22 vorliegt. Das Ausreiben von Patronenlagern ist eine in der Waffentechnik übliche Handlung, wozu die notwendigen Einrichtungen und Werkzeuge im Handel erhältlich sind.

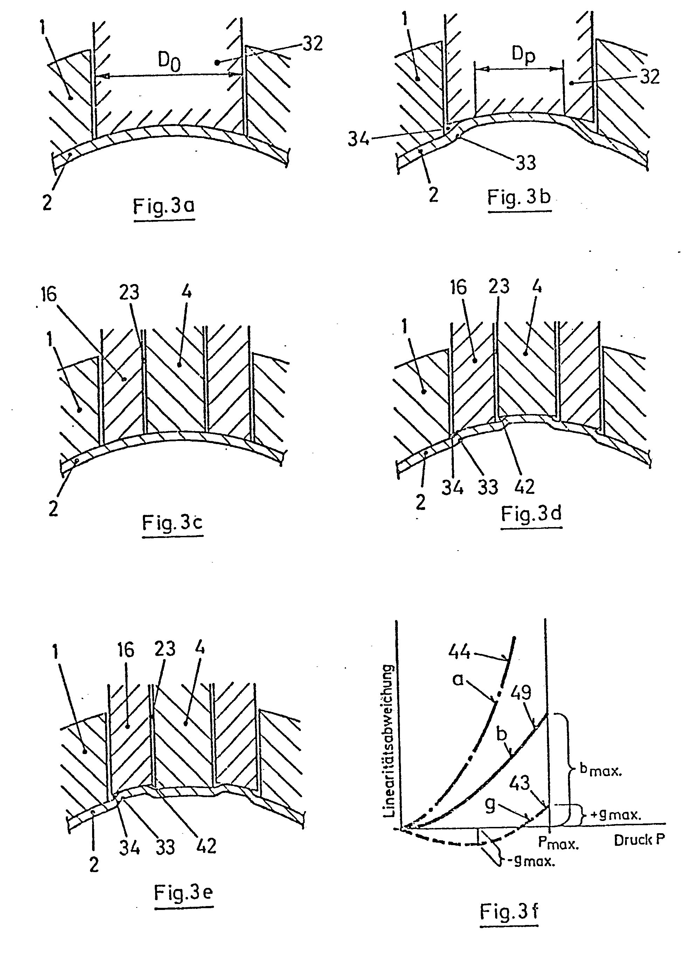

Erfindungsgemäss sind die Federsteifigkeiten bzw. Federkonstanten von Kraftübertragungsstempel 4 und Aussenhülse 16 gegenüber einem Einfedern bei einem auf ihre Stirnflächen 21 bzw. 22 ausgeübten spezifischen Flächendruck dergestalt aufeinander abgestimmt, dass beide Teile gleiche oder annähernd gleiche Einfederungswege vornehmen. Dies sei anhand von Fig. 3a bis 3f näher erläutert. Fig. 3a und 3b zeigen dabei ballistische Kraftaufnehmer ohne Vorsehen von einer den Kraftübertragungsstempel umgebenden Aussenhülse, während Fig. 3c bis 3e einen Kraftnehmer nach der Erfindung betreffen.

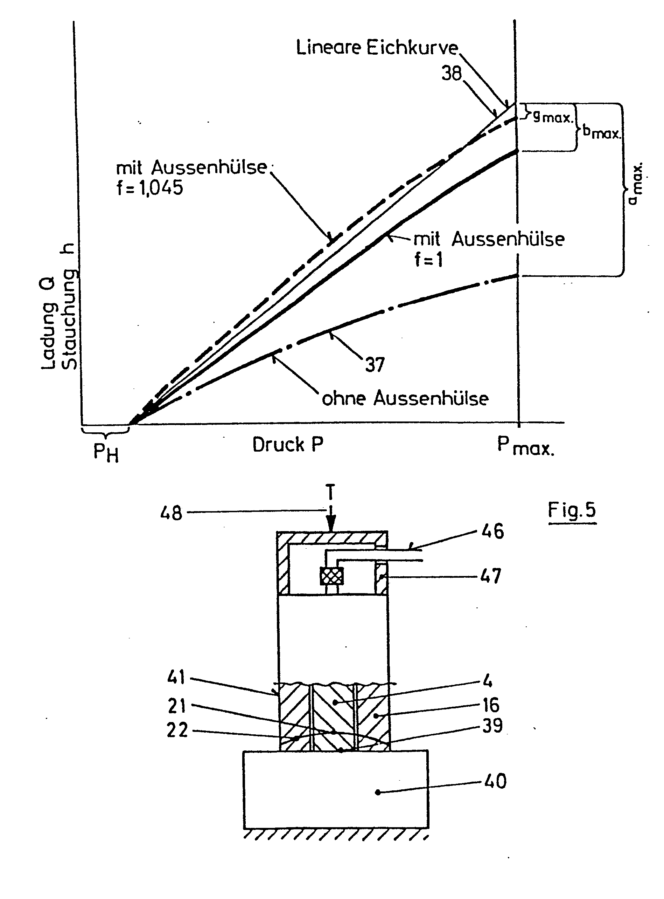

Wie schon eingangs erwähnt, ist es nicht möglich, einen Kraftübertragungsstempel, in Fig. 3a mit 32 bezeichnet, so auszubilden, dass seine Steifigkeit in Axialrichtung ebenso gross wie diejenige des Patronenlagers 1 bei einer Aufweitung der Patronenhülse 2 ist. Der Kraftübertragungsstempel 32 gibt also bei einer einwirkenden Druckbelastung stets etwas nach und bildet gegenüber dem Patronenlager 1 eine Vertiefung. Diese Vertiefung ist Ursache für wesentliche Unlinearitäten im Verlauf der Eichkurve Q=f(P) mit Q=Ladung und P=Verbrennungsdruck in der Patrone. Die infolge der gebildeten Vertiefung auftretende Verformung 33 an der Patronenhülse 2 gemäss Fig. 3b lässt zwischen der Stirnfläche des Kraftübertragungsstempels 32 und der Aussenfläche der Patronenhülse 2 einen Ringspalt 34 entstehen. Fig. 3a zeigt demgegenüber die Verhältnisse, wie sie bei einem Kraftaufnehmer bekannter Konstruktion unmittelbar nach dem Aufweiten der Patronenhülse, jedoch noch im unbelasteten Zustand des Patronenlagers 1 vorliegen. In diesem Zustand schmiegt sich der Kraftübertragungsstempel 32 lückenlos an die Patronenhülse 2 an. Fig. 3b zeigt die Verhältnisse bei einem hohen Druck innerhalb der Patronenhülse 2 von z.B. 3000 bar. Die Patronenhülse 2 hebt sich daher vom Kraftübertragungsstempel 32 umfänglich etwas ab, so dass der im Querschnitt keilförmige Ringspalt 34 zwischen Hülse 2 und Stempel 32 entsteht. Dieser Ringspalt 34 hat zur Folge, dass die durch den Durchmesser $D_o$ des Kraftübertragungsstempels 32 bestimmte ursprüngliche Berührungsfläche zwischen Stempel und Patronenhülse in entsprechender Weise verkleinert wird, vgl. Durchmesser $D_p$ der in Fig. 3b gezeigten reduzierten Berührungsfläche. Da die Berührungsfläche die Angriffsfläche des Druckes ist, wird der Übertragungsfaktor des Druckes auf das Erfassungselement des Aufnehmers bzw. die Messquarze ebenfalls verringert. Mit anderen Worten: der ursprüngliche Kalibrierfaktor des Aufnehmers fällt ab. Es entsteht dadurch anstelle des in Fig. 4 gezeigten linearen Zusammenhanges zwischen der Ladung Q und dem Druck P (Kurve 38) ein degressiver Kurvenverlauf, vergleiche Kurve 37 in Fig. 4. Eine solche nicht lineare Kalibrierkurve 37 ist unerwünscht, gefordert wird die Gerade 38. Zwischen der Einfederung oder Stauchung h des Kraftübertragungsstempels und der abgegebenen piezoelektrischen Ladung Q besteht ein analoger Zusammenhang, so dass die Kurven 37 und 38 in Fig. 4 ebenfalls das Verhältnis h=f(P) unter den genannten Bedingungen wiedergeben.

Der Verlauf der nicht linearen Kalibrierkurve 37 in Fig. 4 lässt sich durch folgende Gleichungen darstellen:

$$h=h_o\left[\frac{P-P_H}{P_{max}-P_H}-u\times\left(\frac{P-P_H}{P_{max}-P_H}\right)^2\right] \quad (1)$$

$$Q=Q_o\left[\frac{P-P_H}{P_{max}-P_H}-u\times\left(\frac{P-P_H}{P_{max}-P_H}\right)^2\right] \quad (2)$$

Darin bedeuten:
  h=effektive Stauchung des Kraftübertragungsstempels,
  $h_o$=Stauchung des Kraftübertragungs-

stempels bei auf seiner gesamten Stirnfläche gleichmässig einwirkendem Druck $P_{max}$,
  Q=von den Messquarzen abgegebene effektive Ladung bei einem Druck P
  $Q_o$=von den Messquarzen abgegebene Ladung bei auf der gesamten Stirnfläche des Kraftübertragungsstempels einwirkendem Druck $P_{max}$,
  P=Druck
  $P_{max}$=Maximaldruck
  $P_H$=Druck, der zur Aufweitung der Patronenhülse notwendig ist,
  u=Koeffizient für die quadratische Abweichung von der Linearität.

Eine ideale Kalibrierkurve würde nur den linearen Term in Gleichungen (1) und (2) enthalten, während der quadratische Term die Abweichung von der Linearität darstellt und Folge der veränderten Anlageverhältnisse zwischen Kraftübertragungsstempel und Patronenhülse ist.

Dieser quadratische Fehler, im folgenden a genannt, ist zwar gut reproduzierbar und könnte bei der Eichung mit berücksichtigt werden. Das Ausmass der Durchmesserverringerung von $D_o$ in Fig. 3a auf $D_p$ in Fig. 3b hängt jedoch stark von der Steifigkeit der jeweilig verwendeten Patronenhülse ab, so dass der quadratische Fehler a in entsprechender Weise von Fall zu Fall unterschiedlich ausfallen kann. Die Hersteller der bisher bekannten ballistischen Kraftaufnehmer sehen daher vor, eine statische, auf die jeweiligen Anwendungsbedingungen gezielt abgestimmte Druckeichung mit einem Gas oder einer Flüssigkeit an der betreffenden Waffe vorzunehmen. Eine solche statische Druckeichung kann jedoch z.B. durch die Art der Druckaufgabe bedingt, mit weiteren Fehlern bis zu 30% behaftet sein und ist daher unerwünscht.

Bei dem erfindungsgemässen ballistischen Kraftaufnehmer kann dagegen auf eine solche Kalibrierung mit einem Gas oder einer Flüssigkeit verzichtet werden. Dies ist Folge des zusätzlichen Vorsehens der abgestimmten Aussenhülse 16, welche sowohl das Auftreten des quadratischen Fehlers a als auch Fehler höherer Ordnung weitgehend verhindert. Dies sei anhand von Fig. 3c und 3d erläutert. Im schwach belasteten Zustand der Patronenhülse 2 liegen gemäss Fig. 3c infolge des Ausreibens des Patronenlagers 1 die Stirnflächen von Aussenhülse 16 und Kraftübertragungsstempel 4 bündig auf der Aussenfläche der Patronenhülse 2 an. Unter höherem Druck gemäss Fig. 3d weichen die Aussenhülse 16 und der Kraftübertragungsstempel 4 infolge der Aufweitung der Patronenhülse 2 gegenüber der Bohrung des Patronenlagers 1 zurück. Da jedoch die Abmessungen der Stirnflächen 21 und 22 sowie die Elastizitäten von Aussenhülse 16 und Kraftübertragungsstempel 4 in der erfindungsgemässen Weise aufeinander abgestimmt sind, ist die Relativverschiebung der beiden Teile zueinander nahezu Null.

Man erreicht diese Abstimmung zweckmässigerweise dadurch, dass man an einem Prüfstand eine Kraftansprechempfindlichkeitsprüfung vor Einbau des Aufnehmers in das Patronenlager durchführt, d.h. bevor die Stirnflächen 21 und 22 von Aussenhülse 16 und Kraftübertragungsstempel 4 an die Wölbung der Patronenhülse 2 angepasst sind. Zunächst wird die Kraftansprechempfindlichkeit $E_1$ des Kraftübertragungsstempels 4 alleine, d.h. ohne Aussenhülse 16, bestimmt. Dann wird der gesamte Aufnehmer zusammen mit der Aussenhülse 16 gemäss Fig. 5 gegen die plane Oberfläche 39 eines Stahlblockes 40 gedrückt und die sich dann ergebende Kraftansprechempfindlichkeit $E_2$ ermittelt. Eine erfindungsgemässe Abstimmung der Federsteifigkeiten von Aussenhülse 16 und Kraftübertragungsstempel 4 liegt vor, wenn:

$$E_2 = K \cdot E_1 \qquad (3)$$

$$\text{mit } K = \frac{1}{1 + \dfrac{F_2}{F_1}} \cdot f$$

Darin bedeuten:
$F_1$ = Grösse der Stirnfläche des Kraftübertragungsstempels 4
$F_2$ = Grösse der Stirnfläche der Aussenhülse 16,
$f$ = Korrekturfaktor (wird noch erläutert).

Die Einleitung der Kalibrierkraft T in Fig. 5 erfolgt über ein Gehäuse 47 mit einer Aussparung für die Durchführung eines Kabels 46, das zu einem Verstärker und einem Aufzeichnungsgerät führt.

Die Aussenhülse 16 muss vor der genannten Abstimmung hinsichtlich ihrer Wandstärke etwas überdimensioniert sein, damit zunächst ein zu kleiner Faktor K erhalten wird. Dann wird die Aussenhülse 16 an der in Fig. 1 gezeigten zwischenliegenden Stelle H 41 ihres Aussenumfanges vorsichtig abgedreht, wodurch der Faktor K ansteigt, bis das oben angeführte Reduktionsverhältnis K erreicht ist. Danach ist gewährleistet, dass die Kraft auf den Übertragungsstempel 4 und die Aussenhülse 16 gleichmässig verteilt vorliegt, d.h. überall die gleiche Flächenpressung herrscht.

Die Einspannverhältnisse beim grundlegenden Abgleich des ballistischen Kraftaufnehmers nach der Erfindung entsprechen wegen des Einflusses der Patronenhülse 2 nicht ganz den Einbauverhältnissen in einer Waffe, da der Einfluss der sich an der Übergangsstelle zwischen Patronenlager 1 und Aussenhülse 16 gemäss Fig. 3d einstellenden Verformung 33 der Patronenhülse noch nicht berücksichtigt ist. Diese Verformung 33, die sich anders als bei dem bekannten Kraftaufnehmer gemäss Fig. 3a nicht direkt auf den Kraftübertragungsstempel auswirkt, ist, wie oben erwähnt, verantwortlich für den quadratischen Fehler $a$. Infolge der Verformung 33 der Patronenhülse 2 bzw. der Bildung des relativ grossen Ringspaltes 34 wird die theoretisch gleich grosse Einfederung oder Stauchung von Aussenhülse 16 und Kraftübertragungsstempel 4 nicht ganz erreicht; es entsteht vielmehr eine leichte Relativverschiebung zwischen Kraftübertragungsstempel 4 und Aussenhülse 16 (vgl. Fig. 3d), so dass an der Übergangsstelle zwischen Kraftübertragungsstempel 4 und Aussenhülse 16 ein Ringspalt 42 auftritt, der jedoch wesentlich kleiner als der Ringspalt 34 an der Verformungsstelle 33 der Patronenhülse 2 ist und daher einen entsprechend geringeren Einfluss auf die Abweichung von der linearen Eichkurve hat. Die durch den Ringspalt 42 hervorgerufene Reduktion der Druckangriffsfläche am Kraftübertragungsstempel 4 bedingt eine Abweichung von der linearen Eichkurve, im folgenden $b$ genannt, die um eine Grössenordnung kleiner als die vorgenannte Abweichung $a$ ist und, wie sich rechnerisch zeigen lässt, in der 4. Potenz vom Druck P abhängt.

Der Verlauf dieser Abweichung $b = f(P)$ bei einem typischen ballistischen Kraftaufnehmer nach der Erfindung mit einem Verhältnis des Aussendurchmessers der Aussenhülse 16 zum Aussendurchmesser des Kraftübertragungsstempels 4 von 2:1 und $f = 1$ in Gleichung (3) ist in Fig. 3f durch die ausgezogene Kurve 49 wiedergegeben. Zum Vergleich zeigt die strichpunktierte Kurve 44 in Fig. 3f den Verlauf der quadratischen Abweichung $a = f(P)$ bei einem Aufnehmer herkömmlicher Bauart.

Mit der erfindungsgemässen Massnahme des Vorsehens einer auf das Einfederungsverhalten des Kraftübertragungsstempels 4 gezielt abgestimmten Aussenhülse 16 alleine lässt sich somit ein weitgehender Angleich der effektiven Kurve $Q = f(P)$ an die lineare Kurve erreichen.

Wie nachfolgend gezeigt werden wird, kann die Annäherung an den linearen Verlauf $Q = f(P)$ weiter dadurch verbessert werden, dass man statt mit einem Korrekturfaktor $f = 1$, d.h. gleich hoher Flächenpressung auf die Aussenhülse 16 und den Kraftübertragungsstempel 4, letzteren etwas, z.B. um 4,5%, steifer als die Aussenhülse 16 ausbildet. Der Korrekturfaktor f wird dann grösser als 1, z.B. 1,045. Dadurch wird erreicht, dass der Kraftübertragungsstempel 4 bei einer kontinuierlichen Druckerhöhung nicht nur eine Einsenkung gegenüber der Aussenhülse 16 gemäss Fig. 3d erfährt, sondern z.B. bei $P = 0,4\,P_{max}$ Fig. 3e, über die Stirnfläche 22 der Aussenhülse 16 etwas hervorragt, während bei $P = 0,8\,P_{max}$ die Stirnflächen der beiden Teile 4, 16 miteinander fluchten und sich bei $P > 0,8\,P_{max}$ wieder eine Einsenkung des Kraftübertragungsstempels 4 gegenüber der Aussenhülse 16 einstellt, vgl.

Unter diesen Voraussetzungen folgt die Abweichung $b$ von der Linearität nicht mehr der Kurve 49 in Fig. 3f, sondern der gestrichelten Kurve 43. Anstelle eines in einer Richtung sich durchgehend auswirkenden Verschiebungsfehlers $b$ erhält man einen Verschiebungsfehler $\pm g$, der sich während eines ersten Abschnitts in einer positiven und während eines zweiten Abschnittes in einer negativen Abweichung von der linearen Kurve Q=f(P) äussert. Der einseitige Verschiebungsfehler b kann durch diese Massnahme um eine Grössenordnung herabgesetzt werden, so dass er für praktische Zwecke vernachlässigt werden kann.

Darauf hinzuweisen ist, dass anstelle der Rechnung mit einem Korrekturfaktor f>1 bzw. 1,045 ähnliche Ergebnisse auch dadurch erhalten werden können, dass man unter Beibehaltung von f=1 die Steigung der linearen Kurve so verändert, dass sie quasi eine Mittelung der effektiven Kurve Q=f(P) darstellt. Mit anderen Worten: man multipliziert den Druckkalibrierungsfaktor Q/P, der sich aus der Kraftkalibrierung gemäss Fig. 5 ergibt, mit einem Faktor k<1, z.B. 0,955 (entsprechend einer Verringerung von 4,5%). Hierdurch wird der Fehler b zwar nicht verringert, jedoch längs der verschobenen linearen Eichkurve in Plus- und Minusrichtung verteilt. Das letztgenannte Verfahren läuft darauf hinaus, eine parabelförmig verlaufende Kurve durch eine Gerade anzunähern.

Nachdem der ballistische Kraftaufnehmer nach der Erfindung in der beschriebenen Weise abgestimmt worden ist, braucht der Verwender der Messanordnung nur noch mit einer Patronenlagerreibahle die endgültige Anpassung der Stirnflächen 21, 22 von Aussenhülse 16 und Kraftübertragungsstempel 4 an die Krümmung des Patronenlagers 1 vorzunehmen. Durch das Ausreiben wird der Kraftübertragungsstempel 4 im Mittel dabei stärker verkürzt als die Aussenhülse 16. Die erfolgte Grundabstimmung der Elastizitäten dieser Teile wird dadurch je nach Radius der Bohrung im Patronenlager 1 und der Abmessung von Aussenhülse 16 und Kraftübertragungsstempel 4 etwas gestört, was sich in einer Versteifung des Kraftübertragungsstempels 4 um einen Wert von ca. 0,5% bei herkömmlicher Infanteriemunition auswirken kann. Wegen dieses Effektes ist der Korrekturfaktor f entsprechend zu reduzieren, z.B. von 1,045 auf 1,04, bzw. der obengenannte Korrekturfaktor k für die Kalibrierkonstante von z.B. 0,955 auf 0,96 heraufzusetzen. Darauf hinzuweisen ist, dass der Wert für den Versteifungseffekt des Kraftübertragungsstempels 4 infolge der Ausreibung von dessen Stirnfläche 21, der mit 0,5% angegeben wurde, solange zutrifft, wie das Verhältnis von Durchmesser der Patronenhülse zu Durchmesser und Länge des Kraftübertragungsstempels 4 annähernd gleichbleibt. Wenn man einen erfindungsgemässen Kraftaufnehmer für ballistische Messungen bei grosskalibrigen Feuerwaffen, wie Kanonen, verwendet, ohne gleichzeitig den Aufnehmer selbst zu vergrössern, würde das genannte Verhältnis zwischen den Abmessungen von Kraftaufnehmer und Patronenhülse wesentlich kleiner werden. Dementsprechend ist auch der aus dem Ausreiben resultierende Versteifungsfaktor zu verringern.

Darauf hinzuweisen ist ferner, dass sowohl bei der bekannten Aufnehmerbauart als auch der erfindungsgemässen durch die Bildung des Ringspaltes 34 bzw. 42 an der Patronenhülse 2 auf den Kraftübertragungsstempel eine Federwirkung nach Art einer Ringfeder ausgeübt wird, welche Kräfte vom Patronenlager 1 bzw. der Aussenhülse 16 auf den Kraftübertragungsstempel überträgt. Diese Federwirkung, die ebenfalls zu einer Abweichung vom linearen Verlauf der Eichkurve führen kann, ist jedoch bei dem erfindungsgemäss aufgebauten Kraftaufnehmer infolge der geringeren Verformung der Patronenhülse 2 am Kraftübertragungsstempel wesentlich kleiner als bei Aufnehmern herkömmlicher Bauart und kann für praktische Messungen vernachlässigt werden.

Beispiel

Nachfolgend wird ein Beispiel für einen piezoelektrischen Kraftaufnehmer nach der Erfindung für ballistische Messungen bei Handfeuerwaffen typischer Bauart gegeben. Die angegebenen Werte beziehen sich auf Patronenhülsen aus Messing oder ähnlich steifem Material, wobei es sich um typische Infanteriemunition mit einem konischen mittleren Aussendurchmesser von 8,6 mm handelt. Der maximale bei Zündung des Pulvervorrates 3 in der Patronenhülse entwickelte Druck beträgt $P_{max}$=3200 bar; für die anfängliche Aufweitung der Patronenhülse ist ein Anfangsdruck $P_H$=200 bar erforderlich. Die grundlegenden Abmessungen des verwendeten ballistischen Aufnehmers betrugen:

| | |
|---|---|
| Aussen-φ der Aussenhülse (an der Stelle 22) | =6,3 mm |
| Aussen-φ des Kraftübertragungs-stempels (an der Stelle 21) | =3,2 mm |
| Breite des Ringspaltes 23 | ≤0,2 mm |
| Länge des Kraftübertragungsstempels | =4 mm |
| Faktor K (Gl. (3)) | =0,25 |

Bei einem Korrekturfaktor f=1 in Gleichung (3) beträgt die maximale unidirektionale Abweichung $b_{max}$ von der Linearität 0,63%, und dieser Wert $b_{max}$ reduziert sich bei einem Faktor f=1,045 auf $\pm g_{max}$=0,02%. Im Vergleich dazu beträgt die maximale quadratische Abweichung $a_{max}$ bei einem ballistischen Kraftaufnehmer herkömmlicher Art ohne Aussenhülse 5,6%.

Die maximale Relativverschiebung bei $P=P_{max}$ zwischen Aussenhülse 16 und Kraftübertragungsstempel 4, die zur Bildung des Ringspaltes 42 in Fig. 3d führt, beträgt 8,4 μm. Dagegen errechnet sich bei einem Kraftaufnehmer ohne Aussenhülse die Verschiebung zwischen Patronenlager und Kraftübertragungsstempel gemäss Gleichung (1) zu 141,6 μm.

Infolge der erheblich geringeren Verformung der Patronenhülse 2 an dem die Messkraft über-tragenden Aufnehmerteil (Kraft-übertragungsstempel) ist der durch die erwähnte Federwirkung der Patronenhülse verursachte Fehler praktisch vernachlässigbar.

Im Ergebnis wird durch die Erfindung ein ballistischer Kraftaufnehmer bereitgestellt, der für den Anweder den wesentlichen Vorteil bietet, dass er keine an der betreffenden Feuerwaffe vorzunehmende statische Eichprüfung erfordert, sondern seitens des Herstellers mit vorgegebenen Eichkurven geliefert werden kann. Das Vorsehen der Aussenhülse 16, die den Kraftübertragungsstempel 4 in geringem Abstand aussen umgibt, führt zu einer höheren Reproduzierbarkeit der Messungen infolge einer besseren Kraftverteilung auf die Messquarze 5. Die oft in Lehrbüchern verbreitete Meinung, wonach die piezoelektrische Empfindlichkeit, z.B. von Quarzen mit Longitudinaleffekt, unabhängig von der Krafteinleitungsfläche und der Abmessung des Quarzes sei, trifft nur annäherungsweise, nämlich dann zu, wenn sich der Quarz in sämtlichen Koordinatenrichtungen völlig ungehindert verformen kann. Ist dies nicht der Fall, indem z.B. die Verformungen in Y- und Z-Richtung völlig unterdrückt werden, entsteht eine Verringerung der piezoelektrischen Ansprechempfindlichkeit eines Quarzes. In der Praxis hat man in der Regel weder den völlig freien noch den völlig verformungsbehinderten Zustand.

Die Kraftansprechempfindlichkeit eines Piezoquarzes wird somit von der Art der Krafteinleitung beeinflusst. Was die Auflage des Kraftübertragungsstempels 4 auf der Oberfläche der Patronenhülse 2 betrifft, ist trotz sorgfältiger Anpassung nicht stets damit zu rechnen, dass ideale Anlageverhältnisse vorliegen. Es genügen vielmehr schon Versetzungen von Bruchteilen von Mikrometern, um u.U. erhebliche Unterschiede in der Belastung von einzelnen Bereichen des Kraftübertragungsstempels 4 zu verursachen. Ballistische Kraftaufnehmer bekannter Bauart verwenden zumeist Messquarze unter Ausnutzung des piezoelektrischen Longitudinaleffektes, die sehr nahe an der Patronenhülse 2 angeordnet sind. Zwischen den Messquarzen und der Patronenhülse befindet sich im eigentlichen Sinne kein Kraftübertragungsstempel mehr, sondern nur eine verdickte Zwischenwand oder Membran, an der die Wölbung der Patronenhülse eingearbeitet ist. Inhomogenitäten an der Auflagefläche solcher Kraftaufnehmer auf der Patronenhülse äussern sich daher unmittelbar als Inhomogenitäten bei der Kraftverteilung auf die Messquarze und bewirken, je nach Art der Inhomogenität, z.B. Kantenpressung oder Auflage in der Mitte, verschiedene Kraftansprechempfindlichkeiten.

Durch das erfindungsgemässe Vorschalten eines relativ langen Kraftübertragungsstempels 4 und das hierdurch bewirkte Zurückversetzen der Messquarze 5 wird dagegen eine Homogenisierung der Krafteinleitung auf die Messquarze erreicht, so dass diese seitens der Stirnflächen 7 und 13 von Aufnehmerbasisteil 6 und Kraftübertragungsstempel 4 gleichmässig mit Druck beaufschlagt werden. Da erfindungsgemäss für den Aufnehmer vorzugsweise halbringförmige Messquarze 5 unter Ausnutzung des piezoelektrischen Transversaleffektes verwendet werden, sind die stirnseitigen Berührungsflächen zwischen den Quarzen und den sie einschliessenden Aufnehmerbauteilen von Natur her kleiner als bei Vorsehen von Longitudinalquarzen, so dass eine weitere Homogenisierung des Kraftflusses durch die Messquarze erreicht wird.

Ein weiterer mit der Verwendung von Transversalquarzen erzielter Vorteil ist deren höhere Empfindlichkeit (um den Faktor Länge/Radius der Quarze) gegenüber Longitudinalquarzen. Weiter ist es möglich, die Transversalquarze mit einem Schnitt zu versehen, dessen Widerstand gegenüber hoher Belastung und hoher Temperatur infolge der Unterdrückung der sog. Dauphiné-Zwillingsbildung wesentlich besser als bei Longitudinalquarzen mit X-Schnitt ist, vgl. hierzu auch die eingangs erwähnte deutsche Patentschrift 22 08 023 sowie "Piezoelektrische Messtechnik" von J. Tichy und G. Gautschi, Springer-Verlag 1980, Seite 107 ff.

Die Querschnittserweiterung des Kraftübertragungsstempels 4 im Bereich von dessen mit den Messquarzen 5 in Eingriff befindlicher Stirnfläche 13 hat den Vorteil, dass sich die aus der Druckbeaufschlagung der aktiven Stirnfläche 21 des Kraftübertragungsstempels 4 ergebende Kraft in einer geringeren Flächenpressung der Messquarze 5 äussert. Mit dem ballistischen Kraftaufnehmer nach der Erfindung können daher höhere Explosionsdrücke in der Patronenhülse gemessen werden als bei Aufnehmern herkömmlicher Bauart. Da hierdurch ferner die Masse des Kraftübertragungsstempels 4 verringert wird und sich andererseits Messquarze 5 höherer Steifigkeit vorsehen lassen, ergibt sich eine höhere Eigenfrequenz des Aufnehmersystems und damit eine geringere Empfindlichkeit gegenüber Beschleunigungskräften. Die durch die Reduktion der aktiven Stirnfläche 21 des Kraftübertragungsstempels 4 gegenüber der Auflagefläche 13 für die Quarze bedingte Verringerung der Ladungsempfindlichkeit ist ohne praktische Bedeutung, da bei ballistischen Messungen stets sehr hohe Drücke vorliegen und damit in jedem Fall hohe piezoelektrische Ladungen erzeugt werden.

Bei ballistischen Kraftaufnehmern herkömmlicher Art mit Abstützung auf der Patronenhülse über eine Membran ergibt sich stets ein Kraftnebenfluss von der Membran in das umgebende Aufnehmergehäuse. Hierdurch können bis zu 50% der einwirkenden Druckkräfte an den Messquarzen vorbeigeleitet werden. Auch andere Einflüsse, z.B. Reibung oder Verklemmung, Leckgase oder Fette, die in das Patronenlager gedrückt werden, haben derartige kraftableitende Wirkungen. Bei der Erfindung können sich derartige Kraftnebenschlüsse hingegen nicht oder in nur weit geringerem Umfang auswirken, da der Kraftübertragungsstempel 4 völlig unabhängig von den umgebenden Bauteilen des Kraftaufnehmers elastisch nachgeben kann, so dass die aus dem erwähnten Kraftnebenschlüssen resultierenden Fehlersignale nicht mehr auftreten. Die während der Verbrennung des Pulvervorrates 3 in der Patronenhülse 2 verdrängten Leckgase im Patronenlager 1 sowie eventuell darin befindliche Fette oder dgl. können leicht durch den Ringspalt 23 zwischen Aussenhülse 16 und Kraftübertragungsstempel 4 an die Aussenatmosphäre entweichen und damit keinen seitlichen Druck auf die dünne Spannhülse 11 ausüben. Ein solcher seitlicher Druck auf die Spannhülse 11 würde sich ebenfalls messwertverfälschend auf die Messquarze 5 auswirken.

Ein weiterer sich aus der durch den relativ langen Kraftübertragungsstempel 4 erzielten Zurückversetzung der Messquarze 5 egebender Vorteil liegt darin, dass die bei ballistischen Messungen häufig störenden Temperaturauswirkungen, insbesondere Temperaturtransienten, wesentlich gemildert werden.

Zusammengefasst ermöglicht die Erfindung die Bereitstellung eines, vorzugsweise auf piezoelektrischem Wege wirkenden Kraftaufnehmers für ballistische Druckmessungen, der sehr gut reproduzierbare Signale abgibt, auch wenn er von einem nicht speziell mit der Messtechnik vertrauten Benutzer verwendet wird. Da die Empfindlichkeit nicht mehr, wie bisher, von vielen Zufälligkeiten beim Einbau abhängt, kann der Benutzer mittels des vom Hersteller mitgegebenen Eichfaktors das vom Aufnehmer abgegebene Messignal in einem bestimmen Druckwert direkt umrechnen, wobei lediglich der für das anfängliche Aufweiten der Patronenhülse notwendige Druckschwellenwert $P_H$ hinzuaddiert werden muss. Dieser Druckschwellenwert lässt sich mit ausreichender Genauigkeit aus dem Durchmesser und der Wandstärke der Patronenhülse berechnen.

Vorausgehend wurde die Erfindung in Verbindung mit ballistischen Druckmessungen an Feuerwaffen beschrieben. Es versteht sich jedoch, dass sie auf diesen Anwendungsfall nicht beschränkt ist, sondern für statische und dynamische Druckmessungen überall dort ähnlich vorteilhaft verwendet werden kann, wo der Druck aus bestimmten Gründen nicht direkt, sondern über ein Aufweitungselement auf das Kraftübertragungselement des Aufnehmers einwirkt. Obschon, wie vorbeschrieben, ein piezoelektrisches Erfassungselement in Form von ein oder mehreren, vorzugsweise teilringförmigen Transversalquarzen gegenwärtig bevorzugt wird, können auch Longitudinalquarze oder gebenenfalls unter entsprechender Anpassung der Krafteinleitung nur auf Scherkräfte piezoelektrisch ansprechende Messquarze vorgesehen werden. Der Begriff "Erfassungselement" schliesst ferner eine in geeigneter Weise polarisierte Piezokeramik sowie andere bei Einwirkung einer Kraft piezoelektrisch reagierende Materialien, elektrische Widerstandselemente, insbesondere auch Dehnungsmessstreifen und piezoresistive Elemente mit Halbleiter, und dgl. ein.

**Patentansprüche**

1. Verfahren zum Herstellen eines Aufnehmers für Druckmessungen anhand der Aufweitung eines unter Druck aufweitbaren Bauteiles (2), insbesondere für ballistische Druckmessungen an Geschosspatronen und dgl., mit einer Anordnung, bestehend aus einem Kraftübertragungselement (4) und einem zwischen dem Kraftübertragungselement und einem Aufnehmerbasisteil (6) gehaltenen elektrischen Wandlerelement (5), dadurch gekennzeichnet, dass man die Kraftansprechempfindlichkeit $E_1$ der Anordnung bestimmt, um das Kraftübertragungselement (4) eine Aussenhülse (16) mit überhöhter Steifigkeit anordnet und am Aufnehmerbasisteil (6) befestigt, die Kraftansprechempfindlichkeit $E_2$ der Anordnung mit Aussenhülse bestimmt und von der Aussenhülse (16) Material unter Verringerung von deren Steifigkeit abnimmt, bis die Beziehung

$$E_2 = \cfrac{1}{1 + \cfrac{F_2}{F_1}} \cdot E_1 \cdot f$$

erfüllt ist,

worin $F_1$ die dem Druck ausgesetzte Fläche an der freien Stirnseite (21) des Kraftübertragungselementes (4) ist, $F_2$ die dem Druck ausgesetzte Fläche an der freien Stirnseite (22) der Aussenhülse (16) ist und f ein Korrekturfaktor mit einem Wert von 1,0 bis 1,05 ist,

so dass die Aussenhülse (16) in annähernd dem gleichen Ausmass wie das Kraftübertragungselement (4) dem einwirkenden Druck in Axialrichtung nachgibt.

2. Verfahren nach Anspruch 1, dadurch gekennzeichnet, dass man ein Kraftübertragungselement (4) und eine Aussenhülse (16) mit Überlänge vorsieht, deren freie Stirnseiten (21, 22) plan bearbeitet, so dass sie in einer gemeinsamen Ebene liegen, und die freien Stirnseiten an die Konfiguration des zu prüfenden Bauteiles anpasst.

3. Verfahren nach Anspruch 2, dadurch gekennzeichnet, dass man den Aufnehmer mit planen Stirnseiten (21, 22) von Kraftübertragungselement (4) und Aussenhülse (16) in das Patronenlager einer Feuerwaffe einsetzt und die planen Stirnseiten durch Ausreiben der Patronenlagerbohrung an Ort und Stelle an deren Konfiguration anpasst, so dass die freien Stirnseiten von Kraftübertragungselement und Aussenhülse bündig auf der Oberfläche einer in die Patronenlagerbohrung eingeführten Geschosspatrone aufliegen.

4. Aufnehmer für Druckmessungen anhand der Aufweitung eines unter Druck aufweitbaren Bauteiles (2), insbesondere für ballistische Druckmessungen an Geschosspatronen und dgl., mit einem Kraftübertragungselement (4) und einem zwischen dem Kraftübertragungselement und einem Aufnehmerbasisteil (6) gehaltenen elektrischen Wandlerelement (5), dadurch gekennzeichnet, dass in an sich bekannter Weise das Kraftübertragungselement (4) von einer Aussenhülse (16) umgeben ist, und dass die Kraftansprechempfindlichkeit $E_2$ des Aufnehmers mit Aussenhülse auf die Kraftansprechempfind-lichkeit $E_1$ des Aufnehmers ohne Aussenhülse gemäss der Beziehung

$$E_2 = \cfrac{1}{1 + \cfrac{F_2}{F_1}} \cdot E_1 \cdot f$$

abgestimmt ist,

worin $F_1$ die dem Druck ausgesetzte Stirnfläche (21) des Kraftübertragungselementes (4) ist, $F_2$ die dem Druck ausgesetzte Stirnfläche (22) der Aussenhülse (16) ist und f ein Korrekturfaktor mit einem Wert von 1,0 bis 1,05 ist,

so dass die Aussenhülse (16) in annähernd dem gleichen Ausmass wie das Kraftübertragungselement (4) dem einwirkenden Druck in Axialrichtung nachgibt.

5. Aufnehmer nach Anspruch 4, dadurch gekennzeichnet, dass die dem Druck ausgesetzten Flächen an den freien Stirnseiten (21, 22) des Kraftübertragungselementes (4) und der Aussenhülse (16) in einem Verhältnis $F_1/F_2 = 1/3$ steht.

6. Aufnehmer nach Anspruch 4 oder 5, dadurch gekennzeichnet, dass das Kraftübertragungselement ein in Axialrichtung des Aufnehmers verlängerter Kraftübertragungsstempel (4) ist, dessen freie Stirnseite (21) eine kleinere Fläche als die gegenüberliegende Stirnseite (13) hat, auf der sich das elektrische Wandlerelement (5) abstützt.

7. Aufnehmer nach einem der Ansprüche 4 bis 6, dadurch gekennzeichnet, dass zwischen der Aussenhülse (16) und dem Kraftübertragungselement (4) ein enger Ringspalt (23) vorgesehen ist, der mit der Aussenumgebung in Verbindung steht.

**Revendications**

1. Méthode de réalisation d'un capteur destiné à des mesures de pressions à partir de l'élargissement d'un élément (2) expansible sous pression, en particulier en vue de mesures de pressions balistiques de cartouches de projectiles et autres similaires, à l'aide d'un arrangement composé d'un élément transducteur de force (4) et d'un élément de conversion électrique (5) maintenu entre l'élément transducteur de force et un pièce de base (6) du capteur, caractérisé par le fait que la sensibilité de réponse $E_1$ de l'arrangement est d'abord déterminée, que la sensibilité de réponse $E_2$ de l'arrangement avec bague extérieure (16) de rigidité supérieure à l'élément transducteur de force (4), bague entourant l'élément transducteur de force (4) et fixée à la pièce de base (6) du capteur, est ensuite déterminée, et que de la matière est enlevée enfin de la bague extérieure (16) en vue de réduire sa rigidité, jusqu'à ce que l'équation

$$E_2 = \cfrac{1}{1 + \cfrac{F_2}{F_1}} \cdot E_1 \cdot f$$

soit satisfaite et dans laquelle $F_1$ représente la surface de la face (21) libre de l'élément transducteur de force (4) accusant la pression, $F_2$ représente la surface de la face (22) libre de la bague extérieure (16) accusant la pression et f est un facteur de correction d'une valeur de 1,0 à 1,5, de sorte que la bague extérieure (16) accuse la pression dans le sens axial, dans une mesure approximativement égale à celle accusée par l'élément transducteur de force (4).

2. Méthode qui, selon la revendication 1, se caractérisé par le fait qu'un élément transducteur de force (4) et une bague extérieure (16) d'une longueur excessive (ou surlongueur) sont prévus, que les surfaces libres (21, 22) de ces pièces sont usinées de manière plane de sorte qu'elles se présentent selon un même plan, et que les surfaces libres sont adaptées (ajustées) à la configuration de l'élément à tester.

3. Méthode qui, selon la revendication 2, se caractérise par le fait que le capteur est inséré dans le magasin d'une arme à feu alors que les surfaces (21, 22) de l'élément transducteur de force (4) et de la bague extérieure (16) sont planes, et que ces surface planes sont adaptées ou ajustées en lieu et place de l'orifice du magasin, par voie d'alésage, de sorte que les surfaces d'attaque du pilon transducteur de force et de la bague extérieure adhèrent parfaitement au diamètre extérieure (ou surface) d'une cartouche de projectile introduite dans l'orifice du magasin.

4. Capteur destiné à des mesures de pressions à partir de l'élargissement d'un élément (2) expansible sous pression, en particulier en vue de mesures de pressions balistiques de cartouches de projectiles et autres similaires, à l'aide d'un élément transducteur de force (4) et d'un élément de conversion électrique (5) maintenu entre l'élément transducteur de force et une pièce de base (6) du capteur, caractérisé par le fait que l'élément transducteur de force (4) est, d'une manière connue en soi, entouré d'une bague extérieure (16) et que la sensibilité de réponse $E_2$ du capteur avec bague extérieure est équilibrée suivant la sensibilité de réponse $E_1$ du capteur sans bague extérieure, selon l'équation

$$E_2 = \cfrac{1}{1 + \cfrac{F_2}{F_1}} \cdot E_1 \cdot f$$

dans laquelle $F_1$ représente la surface (21) de l'élément transducteur de force (4) qui est exposée à la pression, $F_2$ représente la surface (22) de la bague extérieure (16) qui est exposée à la pression et f est un facteur de correction d'une valeur de 1,0 à 1,05, de sorte que la bague extérieure (16) accuse la pression dans le sens axial, dans une mesure approximativement égale à celle accusée par l'élément transducteur de force (4).

5. Capteur qui, selon la revendication 4, se caractérise par le fait que les surfaces exposées à la pression ont, aux faces libres (21, 22) de l'élément transducteur de force (4) et de la bague extérieure (16), un rapport $F_1/F_2=1/3$.

6. Capteur qui, selon la revendication 4 ou 5, se caractérisé par le fait que l'élément transducteur de force est un pilon transducteur de force (4) prolongé dans le sens axial du capteur, dont la surface d'attaque (21) libre est plus petite que la surface opposée sur laquelle repose l'élément de conversion piézo-électrique (5).

7. Capteur qui, selon une des revendications 4 à 6, se caractérise par le fait qu'un étroit passage annulaire (23), prévu entre la bague extérieure (16) et l'élément transducteur de force (4), se trouve en liaison avec l'extérieur.

**Claims**

1. Method for the manufacture of a sensor for pressure measurements by the expansion of a component (2) expansible under pressure, particularly for ballistic pressure measurements on shell cartridges and the like, with an arrangement comprising a force-transmission element (4) and an electrical transducer element (5) held between the force-transmission element and a sensor base part (6), characterised in that the force-responsive sensitivity $E_1$ of the arrangement is determined, an outer sleeve (16) with increased stiffness is arranged around the force-transmission element (4) and secured to the sensor base part (6), the force-responsive sensitivity $E_2$ of the arrangement with the outer sleeve is determined and material is removed from the outer sleeve (16) so as to reduce its stiffness until the equation:

$$E_2 = \cfrac{1}{1+\cfrac{F_2}{F_1}} \cdot E_1 \cdot f$$

is satisfied,

wherein $F_1$ is the area of the free end face (21) of the force-transmission element (4) exposed to the pressure, $F_2$ is the area of the free end face (22) of the outer sleeve (16) exposed to the pressure and is a correction factor with a value of from 1.0 to 1.05,

so that the outer sleeve (16) responds to the operative pressure in the axial direction approximately to the same extent as the force-transmission element (4).

2. Method according to claim 1, characterised in that a force-transmission element (4) and an outer sleeve (16) are provided with longitudinal extensions whose free end surfaces (21, 22) are made flat so that they lie in a common plane and the free end surfaces are matched to the configuration of the component to be tested.

3. Method according to claim 2, characterised in that the sensor is inserted with the flat end surfaces (21, 22) of the force-transmission element (4) and the outer sleeve (16) in the cartridge chamber of a firearm and the flat end surfaces are adapted in configuration to the cartridge chamber bore by reaming, so that the free end surfaces of a force-transmission element and the outer sleeve lie closely against the surface of a shell cartridge introduced into the cartridge chamber bore.

4. Sensor for pressure measurements by the expansion of a component (2) expansible under pressure, particularly for ballistic pressure measurements on shell cartridges and the like, with a force-transmission element (4) and an electrical transducer element (5) held between the force-transmission element and a sensor base part (6), characterised in that in a manner known *per se*, the force-transmission element (4) is surrounded by an outer sleeve (16) and that the force-responsive sensitivity $E_2$ of the sensor with the outer sleeve is related to the force-responsive sensitivity $E_1$ of the sensor without the outer sleeve according to the equation:

$$E_2 = \cfrac{1}{1+\cfrac{F_2}{F_1}} \cdot E_1 \cdot f$$

wherein $F_1$ is the end surface area (21) of the force-transmission element (4) subjected to the pressure, $F_2$ is the end surface area (22) of the outer sleeve (16) subjected to pressure and f is a correction factor with a value from 1.0 to 1.05,

so that the outer sleeve (16) responds to the operative pressure in the axial direction approximately to the same extent as the force-transmission element (4).

5. Sensor according to claim 4, characterised in that the areas of the free end surfaces (21, 22) of the force-transmission element (4) and of the outer sleeve (16) subjected to pressure are in a ratio $F_1/F_2=1/3$.

6. Sensor according to claim 4 or 5, characterised in that the force-transmission element is a force-transmission plunger (4) extending in the axial direction of the sensor, the free end surface (21) of which plunger has a smaller area than the opposite end surface (13), upon which the electrical transducer element (5) is mounted.

7. Sensor according to any of claims 4 to 6, characterised in that a narrow annular clearance (23) which is in communication with the external surroundings, is provided between the outer sleeve (16) and the force-transmission element (4).

0 041 599

Fig. 1

Fig.2

27
26
6
16
3

10
29
19
26
31
28
30
2
1

Fig. 2a

28
27
26

31

Fig. 3a

Fig. 3b

Fig. 3c

Fig. 3d

Fig. 3e

Fig. 3f

3

Fig.5